# EUROPÄISCHE PATENTANMELDUNG

(11) **EP 3 251 511 A1**
(43) Veröffentlichungstag der Anmeldung: **06.12.2017**
(21) Anmeldenummer: 17178346.7
(22) Anmeldetag: 24.05.2013
(51) Int. Cl.: A01N 47/30, A01P 21/00, A01N 59/06

(54) **DIURON ENTHALTENDE AUSDÜNNUNGSMITTEL**

(30) Priorität: 25.05.2012 EP 12169559
(62) Teilanmeldung aus: 13726480.0
(71) Anmelder: LANXESS Distribution GmbH, 51373 Leverkusen (DE)
(72) Erfinder: SAALFELD, Frank, 51377 Leverkusen (DE)
(74) Vertreter: Deblon, Jörg-Stephan

(57) **Zusammenfassung**

Die vorliegende Erfindung betrifft ein Ausdünnungsmittel enthaltend Diuron.

## Beschreibung

Die vorliegende Erfindung betrifft ein Ausdünnungsmittel enthaltend Diuron.

Die Ausdünnung gilt weithin als eine der wichtigsten Maßnahmen im Obstanbau, wobei unter Ausdünnung die Reduktion der Anzahl der befruchteten Blüten bzw. der Fruchtzahl zu verstehen ist. Die Ausdünnung erfolgt typischerweise entweder mechanisch maschinell oder manuell oder durch chemische Mittel.

Durch Ausdünnung erzielbare Vorteile sind insbesondere die Verbesserung der Fruchtgröße, der Fruchtfarbe, und/oder der Fruchtqualität die mit erheblicher Steigerung der Wirtschaftlichkeit einhergeht.

Weiterhin wird eine Verbesserung der Blüte im Nachfolgejahr einer guten Blüte bzw. die Brechung und Verhinderung der Alternanz bei gefährdeten Sorten und Junganlagen sowie die Vermeidung des Brechens überladener Äste, eine starke Erschöpfung des Baums und einer damit einhergehenden reduzierten Kältehärte des Baumes beobachtet.

In den meisten Anbauregionen ist eine manuelle Ausdünnung aus Kostengründen prohibitiv. Die maschinelle Ausdünnung ist nur begrenzt einsetzbar, da sie eine bestimmte Erziehungsform der Bäume erfordert und typischerweise ein hohes Maß an Kollateralschäden an der Pflanze verursacht.

Die chemische Ausdünnung ist daher vorteilhaft.

Bekannte chemische Ausdünnungsmittel wie Harnstoff und Ammoniumthiosulfat, die für diesen Zweck zum Beispiel in Deutschland nicht zugelassen sind, besitzen jedoch eine wenig zufriedenstellende Wirksicherheit und sind in den eingesetzten, notwendigerweise hohen Konzentrationen oft schlecht pflanzenverträglich. Auch andere Ausdünnungsmittel sind in ihrer Wirkung und Pflanzenverträglichkeit nicht besonders praxistauglich, da abhängig vom Entwicklungsstand der Frucht und den klimatischen Bedingungen bei und nach der Applikation immer eine sehr stark ausgeprägte, sortenabhängige Wirkungsunsicherheit beobachtet wurde.

Alle diese bekannten Ausdünnungsmittel wirken über den Hormonhaushalt der Pflanze wie z.B. über die Pflanzenhormone Auxin und Ethylen beim Apfel. Dadurch bedingt werden mit den Mitteln oft unerwünschte Wirkungen beobachtet wie z.B. eine Minderwirkung bei niedrigen Konzentrationen, eine übermäßige Ausdünnung bei ungünstigen Bedingungen zum Applikationszeitpunkt oder teilweise sogar die Förderung des Fruchtbehanges. Die in vielen Ländern eingesetzten Mittel aus der Gruppe der Carbamate wirken zudem als Insektizid und sind daher nur begrenzt einsetzbar.

Die Verwendung von die Photosynthese inhibierenden Wirkstoffen zur Fruchtausdünnung wurde in J. Amer. Soc. Hort. Sci. 115(1): 14 - 19 (1990) bereits beschrieben. Die darin genannten Wirkstoffe haben aber bisher keine kommerzielle Anwendung als Ausdünnungsmittel gefunden, da die Pflanzenverträglichkeit z.B. bei Metribuzin unbefriedigend ist.

Aus EP 1427 286 A ist bekannt, ein Ausdünnungsmittel enthaltend den die Photosynthese inhibierenden Wirkstoff Metamitron einzusetzen.

Metamitron ist für sein pflanzenschädigendes Potential bekannt. Um Blattnekrosen zu vermeiden ist daher eine zeitlich und mengenmäßig sehr exakte Applikation erforderlich.

Es bestand daher die Aufgabe ein alternatives Ausdünnungsmittel bereitzustellen, das wirksam, und einfach anwendbar ist.

Es wurde nun gefunden, dass Ausdünnungsmittel enthaltend Diuron besonders geeignet sind. Von der Erfindung ist daher ein Verfahren zur Ausdünnung umfasst, das dadurch gekennzeichnet ist, dass ein Mittel enthaltend Diuron auf Pflanzenorgane aufgebracht wird. Weiterhin ist von der Erfindung die Verwendung von Mitteln enthaltend Diuron zur Ausdünnung umfasst.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche, bzw. Verfahrensparameter umfasst.

Die Ausdünnungsmittel können zur Blüten- oder Fruchtausdünnung eingesetzt werden, wobei die Fruchtausdünnung bevorzugt ist.

Das erfindungsgemäße Verfahren eignet sich besonders zur Ausdünnung insbesondere der Fruchtausdünnung in Steinobstkulturen und Kemobstkulturen, wobei Kernobstkulturen bevorzugt sind. Bevorzugte Kemobstkulturen sind solche der folgenden Sorten: alle Apfelsorten wie z.B. Boskoop, Braebum, Cox Orange, Elstar, Gala, Gloster, Golden Delicious, Fuji, Kanzi, Jamba, James Grieve, Jonagold, Jonathan, Lobo, McIntosh, Red Delicious, Spartan, alle Birnensorten wie z.B. Conference, Quitte und die asiatische Birne.

Bevorzugte Steinobstkulturen sind solche von Süß- und Sauerkirschen, Pfirsich, Aprikose und Pflaume. Weitere bevorzugte Kulturen sind Olive, Pistazien, Kiwi, Wein oder Zitrusfrüchten wie z.B. Mandarinen.

Sofern Fruchtausdünnung erfolgt, erfolgt die Fruchtausdünnung beispielsweise im 3 bis 30 mm Fruchtstadium, bevorzugt im 6 bis 30 mm-Fruchtstadium, bevorzugt im 8 bis 17 mm-Fruchtstadium, insbesondere für die Kernobstkulturen, wobei die bevorzugten Kulturen in gleicher Weise gelten. Bei Süß- und Sauerkirschen erfolgt die Fruchtausdünnung beispielsweise im 3 bis 17 mm Fruchtstadium.

Für das erfindungsgemäße Verfahren werden Mittel, insbesondere anwendungsfertige Ausdünnungsmittel, enthaltend Diuron eingesetzt, die teilweise neu und dann ebenfalls Gegenstand der Erfindung sind.

Die Mittel, nachstehend synonym auch als anwendungsfertige Ausdünnungsmittel bezeichnet, enthalten vorzugsweise
- mindestens 70 Gew.-%, vorzugsweise mindestens 80 Gew.-%, besonders bevorzugt mindestens 90 Gew.-% Wasser
- 0,001 Gew.-% bis 0,2 Gew.-% bevorzugt 0,002 Gew.-% bis 0,1 Gew.-% und besonders bevorzugt 0,002 bis 0,2 Gew.-% Diuron

Die erfindungsgemäßen Ausdünnungsmittel enthalten neben Diuron und Wasser gegebenenfalls noch Zusatzstoffe.

Weiterhin enthalten die erfindungsgemäßen Mittel noch andere Ausdünnungswirkstoffe, Wachstumsregulatoren und andere weitere agrochemische Wirkstoffe oder jeweils nicht.

Für die nachstehend genannten Zusatzstoffe besteht jeweils unabhängig voneinander auch die Möglichkeit, dass sie nicht enthalten sind.

Als Zusatzstoffe können beispielsweise enthalten sein
- Hygroskopische Substanzen und/oder Feuchthaltemittel zur Regulierung der Feuchtigkeit: Hygroskopische Substanzen sind beispielsweise hygroskopische anorganische Salze wie zum Beispiel Calciumchlorid oder Calciumnitrat; Magnesiumchlorid oder Magnesiumnitrat. Geeignete Feuchthaltemittel sind beispielsweise organische Substanzen wie beispielsweise Glycerin, Polydextrose, Sorbit, Xylit, Propylenglykole, Polyethenylenglycole oder Gemische dieser Polyole.
- Grenzflächenaktive Stoffe, wie beispielsweise Tenside. Tenside können beispielsweise nichtionische, kationische und amphotere Tenside, vorzugsweise anionische Tenside sein. Geeignete anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium, Kalium, Magnesium, Calcium, sowie Ammonium- und Triethanolamin-Salze. Die Alkylethersulfate, Alkyletherphosphate und Alkylethercarboxylate können jeweils beispielsweise zwischen 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat.
- Benetzungsmittel, wie beispielsweise Alkali-, Erdalkali-, Ammoniumsalze von aromatischen Sulfonsäuren, z.B. Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol-oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose.
- Emulgatoren, wie beispielsweise Natrium-, Kalium-und Ammoniumsalze von gradkettigen aliphatischen Carbonsäuren der Kettenlänge C ₁₂-C₂₀, Natriumhydroxyoctadecansulfonat, Natrium-, Kalium-und Ammoniumsalze von Hydroxyfettsäuren der Kettenlänge C₁₂-C ₂₀ und deren Sulfierungs-bzw. Acetylierungsprodukte, Alkylsulfate, auch als Triethanolaminsalze, Alkyl-(C₁₀-C₂₀)-sulfonate, Alkyl(C₁₀-C₂₀)-arylsulfonate, Dimethyldialkyl(C₈-C₁₈)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-Ester mit Polyethylenglykolethern von einwertigen aliphatischen Alkoholen der Kettenlänge C ₁₀-C₁₂ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium-und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol.
- Dispergiermittel, wie beispielsweise Alkylphenolpolyglycolether.
- Stabilisatoren, wie z.B. Cellulose und Cellulosederivate.
- Haftmittel, wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipid sowie Paraffinöle.
- Spreitmittel, wie beispielsweise Isopropylmyristat Polyoxyethylennonylphenylether und Polyoxyethylenlaurylphenylether.
- Organische Lösungsmittel, wie beispielsweise ein- oder mehrwertige Alkohole, Ester, Ketone und Kohlenwasserstoffe. Beispiele für geeignete Lösungsmittel sind Paraffine, z.B. Erdölfraktionen, mineralische und pflanzliche Öle, Butanol oder Glykol sowie deren Ether und Ester, Ketone wie Aceton, Methylethylketon, Methylisobutylketon oder Cyclohexanon.
- Duftstoffe und Farbstoffe, wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink.
- Puffersubstanzen, Puffersysteme oder pH-Wert-Regulatoren.
- Kristallisationsinhibitoren wie N-Alkyl-pyrrolidone, wie beispielsweise N-Octylpyrrolidon und N-Dodecylpyrrolidon, ferner Co-Polymerisate von Polyvinyl-pyrrolidon und Polyvinylalkohol, wie zum Beispiel das unter der Bezeichnung Luviskol VA 64^{(R)} (Fa. BASF) bekannte Polyvinylpyrrolidon / Polyvinylalkohol-Copolymerisat, weiterhin Alkylcarbonsaeure-dimethylamide, wie Decansaeure-dimethylamid oder das unter der Bezeichnung Hallcomid^{(R)} (Fa. Hall Comp.) bekannte C₆₋₁₂-Alkancarbonsaeuredimethylamid-Gemisch, und ausserdem Co-Polymerisate von Ethylendiamin mit Ethylenoxid und Propylenoxid, wie zum Beispiel das unter der Bezeichnung Synperonic^{(R)} T 304 (Fa. Uniqema) bekannte Produkt.

Andere Ausdünnungswirkstoffe können beispielsweise ausgewählt sein aus der Gruppe bestehend aus:
Metamitron, Carbaryl, 2-(1-Naphthylessigsaeure (NAA), Benzyladenin, Naphthyloxyessigsaeure (NES), Gibberillinsaeure, Paclobutrazol, Ammoniumthiosulfat und Harnstoff sowie Ethylenbildner wie Ethephon insbesondere bei schwer ausdünnbaren bzw. leicht alternierenden Apfelsorten wie Elstar oder Red Delicious.

Als Wachstumsregulator kann beispielsweis Prohexadione-Calcium eingesetzt werden.

Als weitere agrochemische Wirkstoffe können die Ausdünnungsmittel beispielsweise Fungizide und Insektizide enthalten.

Fungizide können beispielsweise ausgewählt sein aus der Gruppe bestehend aus: Schwefel (Netzschwefel), Kupferpräparaten, Benzimidazole, Bitertanol, Dichlofluanid, Fenamidone, Fenarimol, Fenhexamid, Fludioxonil, Fluopyram, Fosetyl-aluminium, Iprodione, Myclobutanil, Penconazole, Triadimenol, Vinclozolin, Tolylfluanid (Euparen M(R)), Captan, Propineb, Tebuconazol Trifloxystrobin, Kresoxim-methyl, Dithianon, Cyprodinil, Pyrimethanil, Mancozeb (Dithane Ultra(R)) und Metiram.

Insektizide können beispielsweise ausgewählt sein aus der Gruppe bestehend aus: Dimethoate, Oxydemeton-methyl, Malathion, Parathion-methyl, Phosphamidon, Permethrin, Amitraz, Clofentezin, Cyhalothrin, Beta-cyfluthrin, Fenproximate, Diflubenzuron, Methoxyfenozide, Tebufenozide, Imidacloprid, Thiacloprid, Thiametoxam, Spirodiclofen, Clofentezine, Fenoxycarb, Parathion-methyl, XenTari(R), Tebufenozide, Diflubenzuron, Pirimicarb, Tebufenpyrad, Fenpyroximate, Rapsoel, Mineraloel und Lecithin, wobei Imidacloprid und Thiacloprid besonders hervorgehoben seien.

Die erfindungsgemäß eingesetzten Mittel sowie die erfindungsgemäßen Mittel weisen vorzugsweise weiterhin
- Calciumsalze und vorzugsweise zusätzlich
- Formiat
auf.

Das Calcium und die Formiate können in die Mittel in Form beliebiger Verbindungen eingebracht werden. Bevorzugt sind für die Einbringung von Formiaten Alkalimetallformiate wie beispielsweise Kaliumformiat und Natriumformiat, Alkalimetalldiformate, wie beispielsweise Kaliumdiformiat und Natriumdiformiat und Erdalkalimetallformiate wie beispielsweise Calciumformiat oder Mischungen solcher Formiate. Bevorzugt sind für die Einbringung von Calcium Calciumformiat und andere Calciumsalze von organischen Carbonsäuren, Calciumchlorid, Calciumnitrat und andere anorganische Calciumsalze, wobei Calciumformiat und Calciumchlorid bevorzugt sind und Calciumformiat besonders bevorzugt ist.

In Ausführungsform beträgt das Gewichtsverhältnis von Diuron, Calcium berechnet als Calciumoxid und Formiat berechnet als Ameisensäure 1: (0,1 bis 500):(0,16 bis 900), bevorzugt 1: (0,5 bis 100): (0,8 bis 180).

Calciumformiat wird besonders bevorzugt eingesetzt weil es Probleme vermeidet, die mit den üblicherweise in agrochemischen Formulierungen verwendeten anderen Calciumsalzen gegebenenfalls auftreten können. So ist Calciumformiat z.B. nicht hygroskopisch oder durch alkalische Verunreinigungen (Ca(OH)₂) verunreinigt wie handelsübliches CaCl₂ sowie nicht so schwer wasserlöslich wie Calciumcarbonat. Calciumformiathaltige Formulierungen sind zudem besser regenfest als die üblicherweise verwendeten Calciumsalze (Nitrat, Carbonat und Chlorid).

Als Nebeneffekt von Calciumsalzen wird beobachtet dass die erfindungsgemäßen Mittel bei der Ausbringung von auf junge Pflanzenorgane (Blätter und Früchte) ausgebracht, gut geeignet sind Calcium-Mangelerscheinungen bei den Pflanzen und vor allem den Früchten wie beispielsweise Stippe bei Äpfeln zu vermeiden.

Überraschenderweise erlaubt insbesondere Calciumformiat gute Formulierbarkeit der erfindungsgemäß einzusetzenden und erfindungsgemäßen Mittel.

Die anwendungsfertigen Ausdünnungsmittel werden vorzugsweise aus Mittelkonzentraten z.B. durch Vermischen von Wasser erhalten, um Herstellung, Lagerung und Transport zu vereinfachen.

Mittelkonzentrate können in beliebiger Form formuliert sein. Geeignete Formulierungen sind beispielsweise Kapselsuspensionen (CS), Wasserlösliche Konzentrate (SL), Suspensionskonzentrate (SC), Spritzpulver (WP), Wasserdispergierbare Granulate (WG), wobei Wasserlösliche Konzentrate (SL), Suspensionskonzentrate (SC) und Wasserdispergierbare Granulate (WG) generell bevorzugt sind. Grundsätzlich sind bevorzugte Formulierungsarten im Wesentlichen abhängig von den eingesetzten Bestandteilen und ihren physikalischen Eigenschaften. Da diese jedoch bekannt sind, ist es für den Fachmann gängige Praxis, in wenigen Versuchen eine bevorzugte Formulierungsart zu ermitteln.

Mittelkonzentrate können beispielsweise enthalten
- Mehr als 0,2 Gew.-% bis 30 Gew.-% bevorzugt 0,5 Gew.-% bis 30 Gew.-% und besonders bevorzugt 2 bis 20 Gew.-% Diuron.

Erfindungsgemäße Mittelkonzentrate enthalten gegebenenfalls weiterhin
- 0,2 Gew.-% bis 30 Gew.-% bevorzugt 2 Gew.-% bis 30 Gew.-% an Calciumsalzen berechnet auf Calciumoxid
sowie gegebenenfalls weiterhin
- 0,2 Gew.-% bis 30 Gew.-% bevorzugt 2 Gew.-% bis 30 Gew.-% an Formiaten berechnet auf Ameisensäure

Bezüglich der weiteren Bestandteile der Mittelkonzentrate neben Diuron wie Zusatzstoffe, andere Ausdünnungsmittel, Wachstumsregulatoren und andere weitere agrochemische Wirkstoffe gelten die vorstehend gemachten Angaben für die anwendungsfertigen Ausdünnungsmittel analog.

Die Anwendung der anwendungsfertigen Mittel erfolgt nach üblichen Methoden, also zum Beispiel durch Spritzen, Giessen, Sprühen, Injizieren oder Streichen. Die Anwendung erfolgt vorzugsweise direkt auf die Pflanzenorgane, insbesondere auf Blätter und/oder Früchte.

Für das erfindungsgemäße Verfahren wird beispielsweise so viel an anwendungsfertigen Mitteln ausgebracht, dass 0,005 bis 2 kg/ha, vorzugsweise 0,01 bis 1 kg/ha, besonders bevorzugt 0,01 bis 0,5 kg/ha an Diuron, vorzugsweise pro Anwendungausgebracht werden.

Die Zahl der Anwendungen kann beispielsweise eins bis sechs vorzugsweise eins, zwei oder drei betragen.Die Erfindung besitzt den Vorteil, dass ein effizientes Ausdünnungsmittel bereitgestellt wird, das ohne nennenswerte sonstige Pflanzenschädigungen anwendbar ist.

### Beispiele

In einem Versuchsfeld, das mit Apfelbäumen der Sorte Braeburn Mariri Red M9 (Pflanzabstände 3,5 x 1,0 m) aus einer Pflanzung im Frühjahr 2006 bepflanzt war, wurden am 21.05.2012 bei 10 mm Fruchtgröße der Königsblüte und am 30.05.2012 bei 10 mm Größe der letzten Blüten jeweils vier Parzellen zu je 5 Bäumen mit definierten Mengen der nachstehend definierten Mittel besprüht. Von den fünf Bäumen wurden jeweils 3 markierte Äste von 3 Bäumen mit einheitlicher Blühstärke nach den in nachstehenden Tabellen 1 angegebenen Kriterien sowie die 3 Bäume in toto nach den in Tabelle 2 angegebenen Kriterien ausgewertet. Die Behandlung erfolgte mit einer Aufwandmenge der anwendungsfertigen Mittel von 500 l/Wasser pro Hektar und Meter Kronenhöhe was hier 1000 l pro Hektar entsprach.

| | |
|---|---|
| Kontrollversuch (1): | Ohne Ausdünnung |
| Hand (9): | Ausdünnung erfolgte ausschließlich manuell |
| Versuche 1 bis 3: | Die Ausdünnung erfolgt mit den oben angegebenen Mengen an anwendungsfertigen Mitteln, die durch Mischung der unten angegebenen Mengen eines Suspensionskonzentrates enthaltend 808 g/l Diuron, 50 g/l Ethandiol, 34, g/l Tenside und weitere Formulierungshilfsmittel sowie 380 g/l Wasser erhalten wurden: |
| Versuch 1 (X0): | 7,500 g des Suspensionskonzentrates auf 10 l Wasser (ca 600 ppm) |
| Versuch 2 (X1): | 3,750 g des Suspensionskonzentrates auf 10 l Wasser (ca 300 ppm) |
| Versuch 3 (X2): | 1,875 g des Suspensionskonzentrates auf 10 l Wasser (ca 150 ppm) |

**Tabelle 1: Auswertung von jeweils drei markierten Äste an drei Bäumen pro Parzelle**

| **Behandlung** | | **Blütenbüschel [n]** | **Früchte vor Junifall [n]** | **Früchte nach Junifall [n]** | **Früchte Je 100 Blütenstände** |
|---|---|---|---|---|---|
| | 1/1 | 14,0 | 11,9 | 6,7 | 47,6 |
| | 1/2 | 16,3 | 18,6 | 12,2 | 74,8 |
| | 1/3 | 12,3 | 9,2 | 7,9 | 64,0 |
| | 1/4 | 16,9 | 12,7 | 11,2 | 66,4 |
| **Kontrolle** | **1** | **14,9** | **13,1** | **9,5** | **63,8** |
| | 9/1 | 16,4 | 21,0 | 13,8 | 83,8 |
| | 9/2 | 17,3 | 17,1 | 10,7 | 61,5 |
| | 9/3 | 19,0 | 16,7 | 12,0 | 63,2 |
| | 9/4 | 16,9 | 14,6 | 11,3 | 67,1 |
| **Hand** | **9** | **17,4** | **17,3** | **11,9** | **68,6** |
| | X0/1 | 9,4 | 6,6 | 0,5 | 5,3 |
| | X0/2 | 10,0 | 5,6 | 0,6 | 5,6 |
| | X0/3 | 10,0 | 7,2 | 0,7 | 7,0 |
| | X0/4 | 14,2 | 13,2 | 1,2 | 8,2 |
| **Versuch 1** | **X0** | **10,9** | **8,1** | **0,7** | **6,7** |
| | X1/1 | 13 | 6,9 | 1,4 | 11,1 |
| | X1/2 | 14,4 | 10,0 | 1,4 | 10,0 |
| | X1/3 | 15,8 | 6,0 | 1,2 | 7,7 |
| | X1/4 | 11,9 | 9,4 | 1,2 | 10,3 |
| **Versuch 2** | **X1** | **13,8** | **8,1** | **1,3** | **9,7** |
| | X2/1 | 13,2 | 11,4 | 2,7 | 20,2 |
| | X2/2 | 15,2 | 10,5 | 4,2 | 27,5 |
| | X2/3 | 12,8 | 12,6 | 4,9 | 38,3 |
| | X2/4 | 16,6 | 11,0 | 3,6 | 21,5 |
| **Versuch 3** | **X2** | **14,4** | **11,4** | **3,8** | **26,5** |

**Tabelle 2: Auswertung der 3 markierten Bäume je Parzelle**

| **Behandlung** | | **Früchte/Baum [n]** | **Ertrag/Baum [kg]** | **Fruchtgröße [mm]** | **Fruchtgewicht (g)** |
|---|---|---|---|---|---|
| | 1/1 | 143,0 | 21,51 | 70,37 | 150,44 |
| | 1/2 | 165,3 | 27,29 | 72,87 | 165,08 |
| | 1/3 | 115,0 | 16,64 | 70,3 | 144,72 |
| | 1/4 | 140,3 | 20,99 | 70,65 | 149,58 |
| **Kontrolle** | **1** | **140,9** | **21,61** | **71,05** | **152,46** |
| | 9/1 | 124,3 | 20,41 | 73,08 | 164,18 |
| | 9/2 | 136,7 | 21,99 | 72,73 | 160,90 |
| | 9/3 | 109,0 | 18,45 | 73,19 | 169,24 |
| | 9/4 | 105,7 | 19,67 | 76,15 | 186,12 |
| **Hand** | **9** | **118,9** | **20,13** | **73,79** | **170,11** |
| | X0/1 | 4,7 | 0,88 | 80,82 | 214,88 |
| | X0/2 | 3,3 | 0,90 | 82,49 | 229,13 |
| | X0/3 | 10,3 | 2,80 | 82,62 | 271,06 |
| | X0/4 | 16,3 | 4,23 | 81,23 | 259,22 |
| **Versuch 1** | **X0** | **8,7** | **2,20** | **81,79** | **243,57** |
| | X1/1 | 7,3 | 1,40 | 78,18 | 231,25 |
| | X1/2 | 19,7 | 5,07 | 83,62 | 257,60 |
| | X1/3 | 23,0 | 5,67 | 81,87 | 246,39 |
| | X1/4 | 8,0 | 2,03 | 83,48 | 263,70 |
| **Versuch 2** | **X1** | **14,5** | **3,54** | **81,79** | **249,74** |
| | X2/1 | 41,0 | 8,63 | 78,57 | 210,56 |
| | X2/2 | 36,3 | 8,40 | 81,04 | 231,21 |
| | X2/3 | 49,7 | 11,50 | 80,40 | 231,53 |
| | X2/4 | 31,0 | 8,27 | 82,14 | 266,68 |
| **Versuch 3** | X2 | 39,5 | 9,20 | 80,54 | 234,99 |

## Patentansprüche

1. Mittel enthaltend
• mindestens 70 Gew.-%, vorzugsweise mindestens 80 Gew.-%, besonders bevorzugt mindestens 90 Gew.-% Wasser
• 0,001 Gew.-% bis 0,2 Gew.-% bevorzugt 0,002 Gew.-% bis 0,1 Gew.-% und q besonders bevorzugt 0,002 bis 0,2 Gew.-% Diuron und
• Calciumsalze

2. Mittel nach Anspruch 1, **dadurch gekennzeichnet, dass** es zusätzlich Formiat enthält.

3. Mittel nach Anspruch 1 oder 2, **dadurch gekennzeichnet, dass** es Calciumformiat enthält.

4. Mittel nach einem der Ansprüche 1 bis 3, **dadurch gekennzeichnet, dass** das Gewichtsverhältnis von Diuron, Calcium berechnet als Calciumoxid und Formiat berechnet als Ameisensäure 1: (0,1 bis 500):(0,16 bis 900), bevorzugt 1: (0,5 bis 100): (0,8 bis 180) beträgt.

5. Mittelkonzentrat enthaltend
• Mehr als 0,2 Gew.-% bis 30 Gew.-% bevorzugt 0,5 Gew.-% bis 30 Gew.-% und besonders bevorzugt 2 bis 20 Gew.-% Diuron.
• 0,2 Gew.-% bis 30 Gew.-% bevorzugt 2 Gew.-% bis 30 Gew.-% an Calciumsalzen berechnet auf Calciumoxid.

6. Mittelkonzentrat nach Anspruch 5 **dadurch gekennzeichnet, dass** es zusätzlich 0,2 Gew.-% bis 30 Gew.-% bevorzugt 2 Gew.-% bis 30 Gew.-% an Formiaten berechnet auf Ameisensäure enthält.

7. Mittelkonzentrat nach Anspruch 5 oder 6, **dadurch gekennzeichnet, dass** es Calciumformiat enthält.

8. Mittelkonzentrat nach einem der Ansprüche 5 bis 7, **dadurch gekennzeichnet, dass** das Gewichtsverhältnis von Diuron, Calcium berechnet als Calciumoxid und Formiat berechnet als Ameisensäure 1: (0,1 bis 500):(0,16 bis 900), bevorzugt 1: (0,5 bis 100): (0,8 bis 180) beträgt.

9. Mittelkonzentrat nach einem der Ansprüche 5 bis 8, **dadurch gekennzeichnet, dass** sie als Kapselsuspensionen (CS), Wasserlösliche Konzentrate (SL), Suspensionskonzentrate (SC), Spritzpulver (WP) oder Wasserdispergierbare Granulate (WG) formuliert sind.

10. Mittel nach einem der Ansprüche 1 bis 4 oder Mittelkonzentrate nach einem der Ansprüche 5 bis 9, **dadurch gekennzeichnet, dass** es weiterhin noch andere Ausdünnungswirkstoffe, Wachstumsregulatoren und andere weitere agrochemische Wirkstoffe enthält oder jeweils nicht.
